**Europäisches Patentamt**

**European Patent Office**

**Office européen des brevets**

(19)

(11) Veröffentlichungsnummer : **0 512 485 A2**

(12) # EUROPÄISCHE PATENTANMELDUNG

(21) Anmeldenummer : **92107595.8**

(22) Anmeldetag : **05.05.92**

(51) Int. Cl.$^5$ : **A62C 2/04,** A62C 3/06, F16L 55/10, F16K 17/00

(30) Priorität : **07.05.91 DE 4114887**

(43) Veröffentlichungstag der Anmeldung : **11.11.92 Patentblatt 92/46**

(84) Benannte Vertragsstaaten : **DE FR GB**

(71) Anmelder : **Bruns, Karsten Anton-Günther-Strasse 23 W-2910 Westerstede 1 (DE)**

(72) Erfinder : **Bruns, Karsten Anton-Günther-Strasse 23 W-2910 Westerstede 1 (DE)**

(54) **Trenn-Schliess-Vorrichtung für Druckrohre in Förder- und Versorgungsanlagen.**

(57)  Die Erfindung bezieht sich auf eine Vorrichtung zur sicheren Durchführung von Löscharbeiten an brennenden Erdgas- und Ölquellen sowie Versorgungsanlagen durch schlagartige Trennung und Absperrung der Fördersonde bzw. des Förderrohres mit der Möglichkeit der Wiederaufnahme der Förderung oder Versorgung. Ein zweiteiliger Klemmblock, Bestandteil dieser Vorrichtung und auf das schadhafte Rohr formschlüssig aufschraubbar, ist mit einem Führungsschlitz zur Aufnahme einer Scherplatte versehen. Nach einer einfachen Rohrmontage des Klemmblocks wird mit diesem ein durch Anschlußbolzen gesichertes Anschlußstück mit Druckzylinder fest verbunden. Die in das Anschlußstück eingebrachte Scherplatte wird von einem Kolben nach Zündung einer Treibladung im Druckzylinder in den Führungsschlitz des Klemmblocks getrieben, wobei eine Schneidkante der Scherplatte die Rohrwandung durchtrennt und das Rohr druckseitig verschließt. Das Anschlußstück wird nach Demontage vom Klemmblock für weitere Arbeitseinsätze dieser Art wiederverwendet.

Fig. 1

EP 0 512 485 A2

Die Erfindung bezieht sich auf eine Vorrichtung zur sicheren Duchführung von Löscharbeiten an brennenden Erdgas- und Erdölquellen sowie Versorgungsanlagen durch schlagartiges Absperren und Trennen einer sogenannten Sonde bzw. eines Versorgungsrohres mit der Möglichkeit zur Wiederaufnahme der Förderung und Versorgung.

Sämtliche bisher bekannten Lösungen und Arbeitsverfahren zur Löschung von Öl- und Gasbränden in Gebieten der Förderung blieben weitgehend auf Sprengmaßnahmen in Nähe der Feuer oder nichtkontrollierbaren Medienaustritte beschränkt in der Absicht, mit dem dabei freiwerdenden Gasdruck die Flamme auszublasen oder das Steigrohr derart zu deformieren, daß ein Nachströmen gestoppt oder mindestens gemindert wird. Wird bei einer solchen Sprengung die Flamme zum Erlöschen gebracht, ist mit weiterem Ausströmen des jeweiligen Mediums zu rechnen. Der Versuch für ein wirksames Abdichten des Rohres bleibt für alle an diesen Arbeiten Beteiligte ein hohes Risiko mit großen Gefahren. Die Wiederherstellung einer zerstörten Fördereinrichtung kann weitgehend ausgeschlossen werden; das Einbringen einer neuen Bohrung bis zur Kaverne ist zwangsläufig die Folge. Ein sogenannter Preventer als Aufsatz auf Bohrsonden ist ein fester Bestandteil des Bohrgerätes und bietet nur Schutz während der Bohrarbeiten ,gegen unkontrolliertes Austreten von Öl und Gas im Augenblick des Anstichs einer Kaverne. Das in der Veröffentlichung DE 36 17 522 dargestellte Prinzip der Einschnürung des Rohrquerschnitts ist wenig geeignet bei Fördermechanismen für Öl und Gas, da dieses weder für extrem hohe Mediendrücke noch für Sonden mit innenliegendem Bohrgestänge dichtenden Abschluß herbeizuführen vermag. Dieses Prinzip unterscheidet sich daher wenig von allen übrigen Präventivmaßnahmen gegen unvorhersehbare Störfälle, die bereits zuvor als Schließvorrichtung fester Bestandteil eines gefährdeten Förder- oder Rohrsystems sein müssen. Hierzu gehören insbesondere sämliche Absperreinrichtungen in Form unterschiedlicher Ventilausführungen für den Hochdruckbereich.

Gemäß der Erfindung in der eingangs genannten Art besteht die Aufgabe darin, eine rohrtrennende Verschlußvorrichtung zu schaffen, die bei einfacher Handhabung eine hohe Sicherheit, welche durch redundanten Einsatz noch erhöht werden kann, in ihren Bestandteilen teilweise mehrfach verwendbar ist und eine Wiederinbetriebnahme bei geringem Aufwand der durch Brand oder andere Einflüsse zerstörte Gas- oder Ölquellen gewährleistet.

Ein Teil der im wesentlichen aus drei Teilen bestehenden Vorrichtung wird mit dem defekten Rohr umschließend fest verbunden, im folgenden als Klemmblock bezeichnet.

Eine Stahlplatte, versehen mit einer oder mehreren Schneidkanten und im Klemmblock in Führungsnuten einschiebbar, stellt die Scherplatte dar.

Das aus den wichtigsten Bestandteilen Zylinder, Kolben und Führungsnuten bestehende Antriebsaggregat, für die Dauer des Einsatzes mit dem Klemmblock fest verbunden, kann nach Gebrauch am Unfallort und einfachem Lösen vom Klemmblock wiederverwendet werden. Als Antriebsmedium für den Kolben dient ein Treibsatz in Form einer kartusche; eine Hydraulik oder andere Treibmittel sind denkbar.

Die Anwendung der Vorrichtung geschieht in der Weise, daß der Klemmblock in sicherem Abstand zur Öffnung am Rohr rutschfest verschraubt wird. Das Antriebsaggregat, bestückt mit einer in Führungsnuten gehaltenen Scherplatte, wird seitlich auf den Klemmblock aufgeschoben und durch Bolzen gesichert. Eine von außen in den Zylinder des Antriebsaggregats eingebrachte Treibladung bewirkt bei Zündung derselben den Vortrieb des Kolbens, der die mit dem Rohr zugewandten Schneidkanten ausgestattete Scherplatte mit hoher Kraft und Beschleunigung in den Klemmblock treibt, dadurch das Rohr abtrennt und das defekte Rohrende auswirft. Das Versagen einer solchen Vorrichtung als Funktionseinheit kann grundsätzlich nicht ausgeschlossen werden. Eine Präventivmaßnahme ist die Mehrfachanordnung solcher Vorrichtungen am Rohr, wobei im Einsatz mit der Inbetriebnahme der äußeren, dem Rohrende am nächsten installierten Vorrichtung begonnen wird. Ein weiterer Vorteil dieser Vorrichtung liegt bei Inbetriebnahme in einem eng begrenzten Gefahrenbereich. Konstruktiv kann Klemmblock oder Scherplatte derart beschaffen sein, daß sich nach erfolgtem Rohrabschluß und Trennung des Endstücks mit einfachen Mitteln die ursprüngliche Konstellation der Förderanlage wieder herstellen läßt.

Zur Erläuterung der Erfindung wird in der Zeichnung ein Beispiel dargestellt und im folgenden beschrieben. Es zeigen:

Fig. 1 eine erfindungsgemäße Trenn-Schließ-Vorrichtung für Druckrohre in Förder- und Versorgungsanlagen in schematischer Darstellung.

Fig.2 eine Scherplatte als Bestandteil von Fig.1

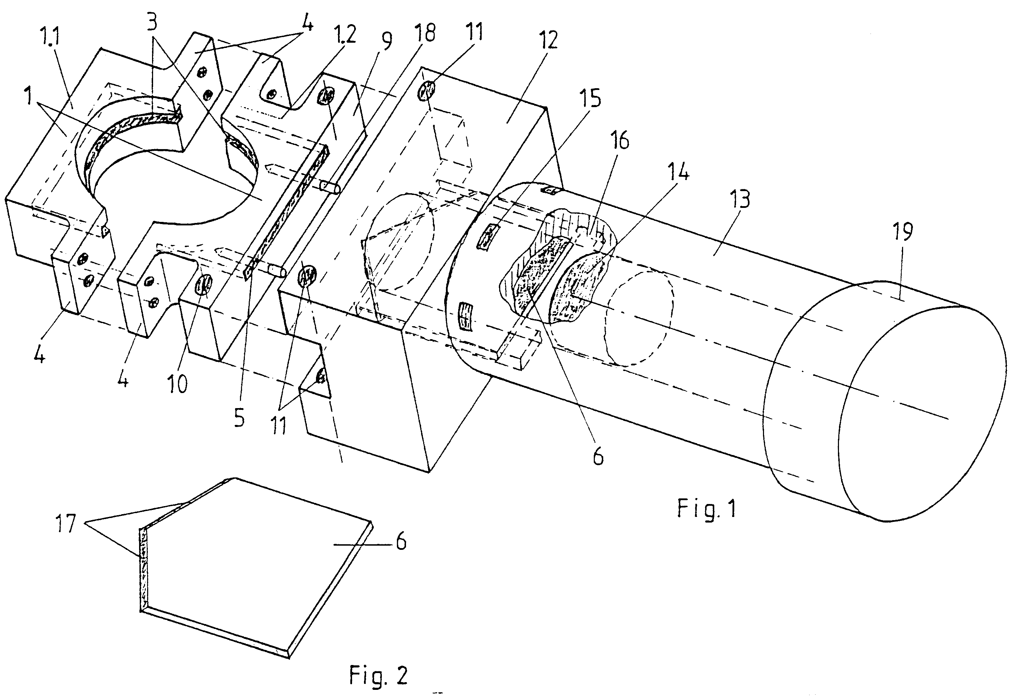

Fig.1: In der Gestalt ähnlich einer doppellaschigen Rohrschelle ist der mit Führungsschlitzen 3 versehene zweiteilige Klemmblock 1 beschaffen, bestehend aus einem Vorderteil 1.2 und einem Hinterteil 1.1. Werden Vorder- und Hinterteil zusammengefügt. ergänzen sich beide Halbkreisausschnitte zum Vollkreis, der in seiner geometrischen Fläche dem des dicht zu umschließenden Druckrohres (nicht dargestellt) entspricht, bezogen auf dessen Außendurchmesser. Die Klemmlaschen 4 beider Klemmteile 1.1 + 1.2 miteinander fest verschraubt, gewährleisten die genaue Positionierung der gegenüberliegenden Führungsschlitze 3. Mit Rücksicht auf die Druckbeständigkeit des montierten Klemmblocks 1 werden die Führungsschlitze 3 im oberen Drittel bzw. Viertel der Klemmblockdicke angeordnet sein. Die Geometrie der Schlitzöffnung 5 entspricht der der Scherplatte 6 mit hoher Paßgenauigkeit. Eine Reihe von Lösungsmöglichkeiten bieten sich als konstruktive Maßnahmen zur Vorbereitung einer späteren Rohrmontage an, soweit diese einer Wiederherstellung für Förderzwecke dienlich sein können. Gleiches gilt für eine beständige Feinabdichtung des Rohrabschlusses. Das Antriebsaggregat mit den Bestandteilen Anschlußstück 12, Druckzylinder 13, Kolben 14 und einem Zylinderendstück 19 zur Aufnahme von Kartusche als Treibladung und Zündeinrichtung, bzw. Hydraulikanschluß oder ähnliches, was für den Vortrieb des Kolbens geeignet ist. Nach Montage des Klemmblocks 1 und festem Sitz an der vorbestimmten Trennstelle auf dem Druckrohr wird das Anschlußstück 12 auf die Haltelaschen 9 des Vorderteils 1.2 geschoben, sodaß der Klemmblock 1 mit dem Antriebsaggregat durch zwei zu sichernde Montagebolzen, welche in die übereinanderliegenden Montagebohrungen 10 + 11 eingeführt werden, fest verbunden ist. Die Scherplatte 6, in Führungsnuten 16 des Anschlußstücks 12 in Achsrichtung des Zylinders 13 verschiebbar gelagert, mit ihren Schneidkanten 17 auf das zu trennende Rohr ausgerichtet, ragt, mit der Schneidkante berührungsnahe mit dem Rohr, nach Fertigmontage in die Schlitzöffnung 5 des Vorderteils 1.2. Wird aus sicherer Entfernung eine am Zylinderendstück 19 eingebrachte Treibladung gezündet, wird die Scherplatte 6 Kolben-angetrieben explosionsartig beschleunigt und rohrabscherend in ihre Endlage gebracht. Bedingt durch den nach oben gerichteten Scherschliff der Scherplatte 6 verformt sich das zu entfernende Rohrende im Randbereich und wird durch die Anlaufschräge des Schliffs aus dem klemmblock 1 geschleudert. Die Treibladung wird zur Sicherstellung einer einwandfreien Funktion der Vorrichtung erheblich überdimensioniert, um die Scherplatte 6 bei gutem Randabschluß am Rohr mit ausreichender Dichtigkeit in ihre Endlage zu bringen. Ein Überschuß an Gasvolumen entweicht kurz vor Erreichen der Endlage über Ausgleichsöffnungen 15 am Druckzylinder 13. Um einen mit Vorspannung behafteten Preßsitz der Scherplatte 6 auf dem Rohrrand zu erhalten und aus Gründen der Sicherheit eine Lageveränderung des Klemmblocks auszuschließen, kann mit dem Vortrieb der Scherplatte 6 mindestens ein Scherstift 18 in die Rohrwandung eingeschossen werden.

**Patentansprüche**

1. Trenn-Schließ-Vorrichtung für Druckrohre in Förder- und Versorgungsanlagen für gasförmige und flüssige Medien mit einem Klemmblock als Rohraufsatz, in den, durch einen Treibsatz über einen Kolben eines Antriebsaggregats beschleunigt, eine Scherplatte rohrtrennend und -schließend mit Schußgeschwindigkeit eingebracht wird,

dadurch gekennzeichnet, daß ein zweiteiliger Klemmblock 1, versehen mit einem kreisförmigen Ausschnitt, über dessen Mittelpunkt die Trennfuge der beiden miteinander verschraubbaren Klemmteile 1.1 + 1.2 verläuft, ausgestattet mit rechteckigen, ausschnittsüberragenden Führungsschlitzen 3 und einer im Randbereich angebrachten Schlitzöffnung 5 in einem Vorderteil 1.2 des Klemmblocks 1 zum Einführen einer das gesamte Schlitzvolumen ausfüllende Scherplatte 6, die gleichermaßen in -der Schlitzöffnung 5 gegenüberliegenden-Führungsnuten 16 eines auf das Vorderteil 1.2 steckbare und durch Bolzen gesichertes Anschlußstücks 12 eines Antriebsaggregats in Ausgangsposition gehalten wird, wobei ein mit dem Anschlußstück 12 fest verbundener Druckzylinder 13 mit Kolben 14 und Kartusche als fernzündbarer Treibsatz weitere Bestandteile des Antriebsaggregats sind.

2. Trenn-Schließ-Vorrichtung nach Anspruch 1, dadurch gekennzeichnet, daß im Druckzylinder 13 oder Anschlußstück 12 Ausgleichsöffnungen 15 für ein überschüssiges Treibgasvolumen eingebracht sind.

3. Trenn-Schließ-Vorrichtung nach Anspruch 1, dadurch gekennzeichnet, daß Scherstifte 18 koinzident zur Scherplatte 6 als Rutschsicherung des Klemmblocks 1 mit eingeschossen werden.

4. Trenn-Schließ-Vorrichtung nach Anspruch 1, dadurch gekennzeichnet, daß die Scherplatte 6 mit einer oder mehreren Schneidkanten 17 und diese mit unterschiedlichen Winkelgraden zur Stoßrichtung versehen ist.

Fig.1

Fig. 2